(19) Europäisches Patentamt
European Patent Office
Office européen des brevets

(11) **EP 2 348 468 A1**

(12) **EUROPEAN PATENT APPLICATION**

(43) Date of publication:
**27.07.2011 Bulletin 2011/30**

(51) Int Cl.:
***G06Q 10/00*** *(2006.01)*

(21) Application number: **10191921.5**

(22) Date of filing: **19.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.12.2009 US 653470**

(71) Applicant: **Tredegar Film Products Corporation Richmond, VA 23225 (US)**

(72) Inventors:
- **Barba, Diego**
  Richmond, VA 23225 (US)
- **Di Gregorio, Alessandro**
  Richmond, VA 23225 (US)
- **Luberti, Rolando**
  Richmond, VA 23225 (US)

(74) Representative: **van Westenbrugge, Andries Nederlandsch Octrooibureau J.W. Frisolaan 13 2517 JS Den Haag (NL)**

(54) **System and method for determining the environmental impact of a process**

(57) A system and method for determining the environmental impact of a process is disclosed in which resources are categorized into distinct Environmental Performance Indicators ("EPI's"), some of which are value EPIs that are derived based on the amount of the resource used per Finished Product Volume (FPV), which is representative of the amount of product that is produced by the process; and others are percentage EPIs that represent a measure of efficiency, and are derived from the amount of renewable resources used as a percentage of total resources used. A graphical representation of the EPIs allows a quick visual interpretation of the environmental friendliness of a particular process or group of processes, and allows a visual comparison between two different processes.

FIG. 7

EP 2 348 468 A1

**Description**

**FIELD OF THE INVENTION**

The present invention relates to process monitoring. More particularly, the present invention relates to a system and method for determining the environmental impact of a process.

**BACKGROUND**

Due to human activities, the $CO_2$ concentration has increased significantly in the last 100 years. The $CO_2$ concentration in atmosphere is directly linked to the Global Warming Potential (GWP), which has both environmental and social implications.

Focusing on the environmental issues, climate changes and in particular, being conscious that the concept of sustainable manufacturing processes will be increasingly important in the future. Major industrialized nations are currently reviewing policy regarding environmental issues, and in particular, taking note of the renewed position on these matters by the U.S. Government. Now, more than ever before, the notion of sustainable manufacturing processes is relevant.

As an organization pursues sustainable manufacturing processes, there is a need to both increase economic benefits and reduce the environmental impact. The most successful companies, going forward, will be those that optimize both production output and environmental efficiency. Therefore, what is needed is an improved system and method for determining environmental impacts of processes, such as manufacturing processes and other business practices.

SUMMARY

In one embodiment of the present invention, a system is provided for determining the environmental impact of a process, comprising:

a) a computation system, the computation system comprising at least one central processing unit, non-volatile storage, and read-only memory;
b) a rendering system, the rendering system comprising a display;
c) the computation system further comprising means for receiving environmental performance data;
d) means for transforming the environmental performance data into a plurality of environmental performance indicator values; and
e) means for rendering a corresponding graphical process indicator on the rendering system, wherein the graphical process indicator comprises an even-sided polygon;
f) wherein the graphical process indicator is divided into a plurality of sectors, wherein each sector comprises a shaded component, the shaded component corresponding to value of one environmental performance indicator.

In another embodiment of the present invention, a system is provided wherein the even-sided polygon is a hexagon.

In another embodiment of the present invention, a system is provided wherein the even-sided polygon is an octagon or a superior polygon.

In another embodiment of the present invention, a system is provided wherein the plurality of environmental performance indicator values comprises:

a) carbon footprint;
b) electric power consumption;
c) natural gas consumption;
d) water footprint;
e) renewable power ratio; and
f) biodegradable materials ratio.

In another embodiment of the present invention, a system is provided wherein each sector of the plurality of sectors of the graphical process indicator is of equal size.

In another embodiment of the present invention, a system is provided wherein each sector of the plurality of sectors is sized based on an importance ranking of an environmental performance indicator.

In another embodiment of the present invention, a system is provided which further comprises a data acquisition subsystem.

In another embodiment of the present invention, a system is provided which further comprises a water meter, the water meter configured and disposed to report water usage to the data acquisition subsystem.

In another embodiment of the present invention, a system is provided which further comprises an electric meter, the electric meter configured and disposed to report electricity usage to the data acquisition subsystem.

In another embodiment of the present invention, a system is provided which further comprises a gas meter, the gas meter configured and disposed to report natural gas usage to the data acquisition subsystem.

In another embodiment of the present invention, a system is provided wherein the graphical process indicator represents a local eco-efficiency.

In another embodiment of the present invention, a system is provided wherein the graphical process indicator represents a global eco-efficiency.

In another embodiment of the present invention, a system is provided wherein the graphical process indicator represents a project eco-efficiency.

In another embodiment of the present invention, a method is provided for determining the environmental impact of a process, comprising the steps of:

a) receiving environmental performance data;
b) transforming the environmental performance data into a plurality of environmental performance indicator values; and
c) rendering a corresponding graphical process indicator on a rendering system, wherein the graphical process indicator comprises an even-sided polygon;
d) wherein the graphical process indicator is divided into a plurality of sectors; and
e) wherein each sector comprises a shaded component, the shaded component corresponding to value of one environmental performance indicator.

In another embodiment of the present invention, a method is provided wherein the step of transforming the environmental performance data into a plurality of environmental performance indicator values comprises dividing a measured consumption rate by a maximum consumption rate, thereby computing a normalized environmental performance indicator.

In another embodiment of the present invention, a method is provided wherein the step of rendering a corresponding graphical process indicator on a rendering system comprises:

a) computing, for each environmental performance indicator, a sum of the reciprocal of the ordinal rank of the environmental performance indicator from a plurality of jurisdictions;
b) dividing each sum by the total of all sums, thereby computing a weighting factor for each environmental performance indicator;
c) multiplying the weighting factor by the area of an un-weighted sector, thereby calculating the area of a dynamic sector; and
d) rendering the dynamic sector on the rendering system.

In another embodiment of the present invention, a method is provided wherein the step of rendering a corresponding graphical process indicator on the rendering system comprises rendering a shaded area within the sector, wherein the shaded area corresponds to the value of the environmental performance indicator.

In another embodiment of the present invention, a method is provided which further comprises the steps of:

a) computing a total area of all sectors;
b) computing a total shaded area;
c) computing a ratio of total shaded area to total area;
d) subtracting the ratio from one to compute a fractional result; and
e) multiplying the fractional result by one hundred, thereby computing a local eco-efficiency value.

In another embodiment of the present invention, a method is provided which further comprises the steps of:

a) computing a plurality of local eco-efficiency values, wherein each local eco-efficiency value corresponds to a different production site, and wherein each production site produces the same product;
b) selecting from the plurality of local eco-efficiency values, a local eco-efficiency value, and designating the selected local eco-efficiency value as a reference local eco-efficiency value; and
c) computing a local eco-efficiency delta for each production site by computing the difference between each of the plurality of local eco-efficiency values with the reference local eco-efficiency value.

In another embodiment of the present invention, a computer-readable medium is provided, which has computer-executable instructions for performing a method comprising:

a) receiving environmental performance data;
b) dividing a measured consumption rate by a maximum consumption rate, thereby computing a plurality of raw environmental performance indicators;
c) computing a weighting factor for each raw environmental performance indicator; and
d) rendering a corresponding graphical process indicator on the rendering system, wherein the graphical process indicator comprises an even-sided polygon;
e) wherein the graphical process indicator is divided into a plurality of sectors;
f) wherein each sector comprises a shaded component, the shaded component corresponding to value of one environmental performance indicator.

In another embodiment of the present invention, a computer-readable medium is provided, wherein the computer-executable instructions for rendering a corresponding graphical process indicator on the rendering system comprise instructions for:

a) computing a dynamic sector area for each of a plurality of environmental performance indicators by multiplying an un-weighted sector area by a weighting factor corresponding to an environmental performance indicator; and
b) rendering a shaded area within the sector, wherein the shaded area corresponds to the value of the environmental performance indicator.

## BRIEF DESCRIPTION OF THE DRAWINGS

The structure, operation, and advantages of the present invention will become further apparent upon consideration of the following description taken in conjunction with the accompanying figures. The figures are intended to be illustrative, not limiting.

In the drawings accompanying the description that follows, often both reference numerals and legends (labels, text descriptions) may be used to identify elements. If legends are provided, they are intended merely as an aid to the reader, and should not in any way be interpreted as limiting.

FIG. 1 shows a block diagram of a system in accordance with an embodiment of the present invention.

FIG. 2 shows an embodiment of a graphical process indicator.

FIG. 3 shows an alternative embodiment of a graphical process indicator.

FIG. 4 shows another alternative embodiment of a graphical process indicator.

FIG. 5 shows a computer screen displaying a plurality of graphical process indicators.

FIG. 6 shows a block diagram of a system in accordance with an alternative embodiment of the present invention.

FIG. 7 is a flowchart showing process steps to perform a method in accordance with an embodiment of the present invention.

FIG. 8 shows an example of a numerical report generated by an embodiment of the present invention.

## DETAILED DESCRIPTION

Embodiments of the present invention provide a system and method for determining the environmental impact of a process. For example, a manufacturing process uses a plurality of resources. Embodiments of the present invention categorize these resources into distinct Environmental Performance Indicators (EPIs). Some EPIs are values EPIs that are derived based on the amount of the resource used per Finished Product Volume (FPV), which is representative of the amount of product that is produced by the process. Other EPIs are percentage EPIs that are derived from the amount of renewable resources used as a percentage of total resources used. An exemplary list of EPIs is provided below:

| Environmental Performance Indicator | Definition | Sample Units |
| --- | --- | --- |
| CFP (Carbon Footprint) | Total $CO_2$ / FPV | g/m2 |
| EPC (Electric Power Consumption) | Total Power /FPV | kWh/m2 |
| NGC (Natural Gas Consumption) | Total Gas consumed / FPV | MJ/m2 |
| WFP (Water Footprint) | Water consumed / FPV | Liter/m2 |
| RPR (Renewable Power Rate) | 100 x Renewable Electric Power / Total Electric Power | % |

(continued)

| Environmental Performance Indicator | Definition | Sample Units |
|---|---|---|
| BMR (Bio materials rate) | Bio. Materials / Total Materials | % |

The CFP (Carbon Footprint) represents the amount of $CO_2$ associated to realization of a specific product (usually from raw material extraction). The EPC (Electric Power Consumption) represents the amount of electricity used by the process per unit of product made by that process. The NGC (Natural Gas Consumption) represents the amount of natural gas used by the process per unit of product made by that process. The WFP (Water Footprint) represents the amount of water used by the process per unit of product made by that process. The RPR (Renewable Power Rate) represents the percentage of power (both purchased, and self-produced) used that comes from renewable sources, such as wind, hydroelectric, or solar, for example. The BMR (Bio materials rate) represents the percentage of biodegradable materials used in the process. CFP, EPC, NGC and WFP are referred to as value EPIs, since they have a value based on FPV. RPR and BMR are referred to as percentage EPIs, since they are based on percentage of total usage of a particular resource.

The group of EPIs mentioned above is not intended to be limiting, and other EPIs are possible without departing from the scope and purpose of the present invention. Embodiments of the present invention transform the seemingly disparate data of the EPIs into a graphical form that can be glanced at by a user to quickly assess the environmental impact of a process at a production site (Local Eco-efficiency). Furthermore, embodiments of the present invention also provide an assessment of a group of production sites, such as multiple factories making the same categories of product via similar processes (Global Eco-efficiency), and also provide an assessment of Product Eco-efficiency, which compares two or more different product or processes for making the same categories of products.

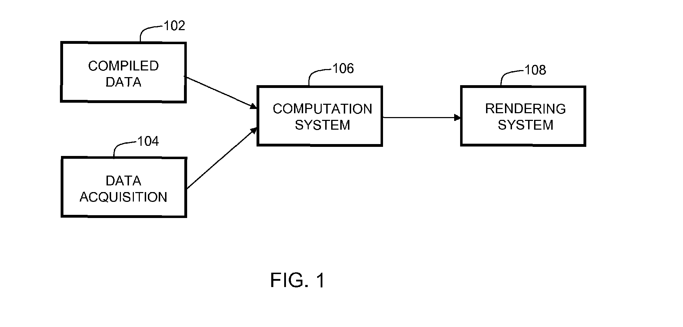

Referring now to the figures, FIG. 1 shows a block diagram of a system 100 in accordance with an embodiment of the present invention. Compiled data 102, and/or data from data acquisition subsystem 104 are input to computation system 106. The compiled data 102, and data from data acquisition subsystem 104 comprise various EPIs. Computation system 106 transforms the EPIs into a novel graphical output that provides a user with an easy and efficient way to assess the environmental efficiency (Eco-efficiency) of a production site or a process.

Some EPIs, such as BMR, may be included in the compiled data 102. Other EPIs may be supplied from the data acquisition subsystem 104, such as WFP, since a parameter such as water usage is measurable in real time. In one embodiment, all EPIs are included in the compiled data 102, thus, the data acquisition subsystem 104 is not required in that embodiment.

EPIs, such as EPC, NGC, WFP, BMR, can be calculated using data that are measurable in real time. Data for consumption of electric power, natural gas, renewable materials, and water often measurable in real-time at a production site, and thus can be acquired by data acquisition subsystem 104. Indeed other EPIs, such as CFP and RPR, are preferably calculated based on data from scientific literature, such as handbooks, and are included as part of compiled data 102. Examples of compiled data may include things such as emissions for the production of a kg of polyprolilene, or percentage of renewable sources for the generation of electricity in Italy.

After calculating each value EPI, each value for EPI *k* is normalized as follows:

$$N_k = \frac{S_k}{R_k}$$

$S_k$ is the actual value of a particular EPI. $R_k$ is selected based on the type of analysis being performed. For example, when considering a manufacturing or processing plant, the average, the sum or the maximum values of indices of all plants in a particular time period. In this way it is possible to compare different plants both in space and time. Otherwise, if comparing two different projects, we consider as reference, the worst value of the indices for each category of impact. $R_k$ should be selected such that it is always larger than the highest possible $S_k$, as so to bound the values of the $N_k$ terms to 1.0 or less.

To bound the values of the $N_k$ terms to 1.0 or less, $R_k$ should be always larger than the highest possible $S_k$; clearly this is not a problem if we are comparing two different projects; instead if we are studying one or a group of plants it's possible in the worst situations that $S_k > R_k$, and we can have that eco-efficiency becomes negative. In this occasion tool set automatically a zero value for eco-efficiency.

Therefore, Rk is a theoretical or practical maximum value for the particular EPI.

Once the Nk terms are calculated, a value efficiency Ve is calculated as follows:

$$Ve = 100 - 100 \times N_k$$

This step is not needed with percentage EPIs (e.g. RPR and BMR), since they are inherently in percentage form already. There is a second form of the equation used to compute *Ve* for percentage EPIs:

$$Ve = 100 \times S_k$$

Each value efficiency and percentage EPI is graphically represented in a graphical progress indicator, which is comprised of an even-sided polygon. The polygon is divided into segments, in which each segment represents a particular EPI. In a preferred embodiment, this polygon is rendered on a computer screen via rendering system 108. Rendering system 108 may comprise a display and graphics processor for rendering the polygon.

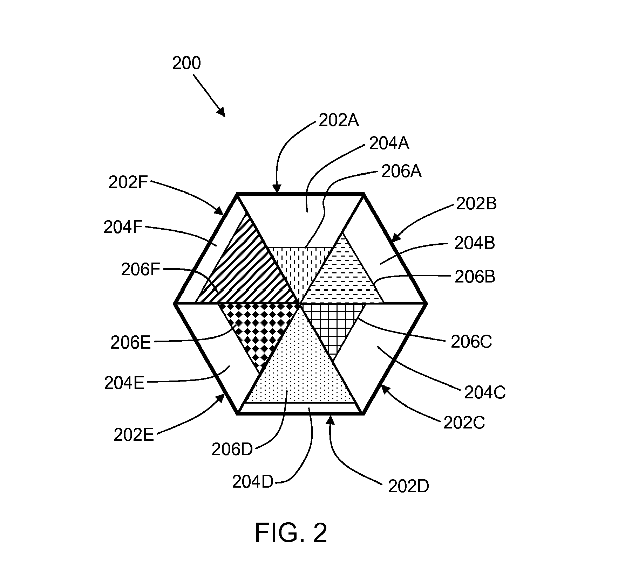

FIG. 2 shows an embodiment of a graphical process indicator 200. Graphical process indicator (GPI) 200 is a hexagon that is divided into equally sized segments (referred to generally as 202, and shown in FIG. 2 as 202A - 202F). This is referred to as a fixed-sector GPI. Each sector 202 has a clear area 204 and a shaded area 206 (shown as 204A - 204F, and 206A - 206F). The shaded area 206 represents the Ve for a given EPI. The percentage of a sector 202 that is occupied by shaded area 206 is the same value as the Ve for a given EPI. Therefore, by rendering a GPI such as that shown in FIG. 2, the EPI data is transformed into a format that is quickly and easily interpreted by a human. More shaded area 206 indicates that the process is more efficient. In the ideal case, a GPI is completely shaded, indicating each EPI is operating at 100% efficiency. In practical cases, it is desired to maximize the shaded areas 206.

In the example of FIG. 2, consider the following relationships:

- Sector 202A represents CFP (Carbon Footprint).
- Sector 202B represents EPC (Electrical Power Consumption).
- Sector 202C represents NGC (Natural Gas Consumption).
- Sector 202D represents WFP (water footprint).
- Sector 202E represents RPR (renewable power rate).
- Sector 202F represents BMR (bio material rate).

Referring now to the GPI 200, it can be quickly inferred that the process is very efficient in terms of water footprint, since shaded area 206D occupies almost the entire sector 202D. Conversely, it can be inferred that there is considerable room for improvement in natural gas consumption, since shaded area 206C does not occupy a majority of sector 202C, and there is a considerable un-shaded area 204C in the sector. Sectors 202 with considerable unshaded areas 204 represent potential improvement areas. Note that while GPI 200 shows a variety of fill patterns for shaded areas 206, it is also contemplated and within the scope of the present invention to use colors instead of, or in addition to, a graphical pattern.

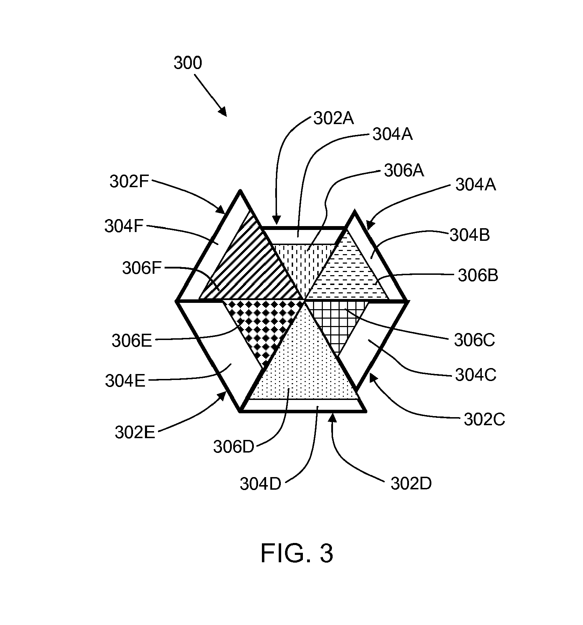

FIG. 3 shows an alternative embodiment of a graphical process indicator 300. This is referred to as a dynamic-sector GPI. In this embodiment, the size of each sector (referred to generally as 302, and shown in FIG. 3 as 302A - 302F) can vary, based on a calculated weighting factor of the corresponding EPI. The weighting factor reflects the importance of a particular EPI, and may be based on subjective factors such as, social, political, and ethical value choices. For example, WFP (water footprint) may have a larger weighting factor (higher importance) in a geographical region where water is scarce, as compared with a geographical region where water is plentiful. While the weighting factors are somewhat subjective, embodiments of the present invention use the following formula in order to more objectively select the weighting factors:

$$W_k = \frac{\sum_i \frac{1}{ranking_{i,k}}}{\sum_k \left( \sum_i \frac{1}{ranking_{i,k}} \right)_k}$$

In the above formula, $W_k$ is a weighting factor for category *k* (where k is selected from the EPI categories, such as WFP, NGC, etc...). The rankings are based on data from global jurisdictions, such as G20 nations, for example. The $ranking_{i,k}$ represents the world position of nation *i* for category k. By computing a sum of the reciprocal of the ordinal rank of the environmental performance indicator from a plurality of jurisdictions, and then dividing each sum by a total of all sums, a weighting factor for each EPI is calculated.

For example, consider three nations where a company has three different production sites (USA, China, and Italy) and consider a particular EPI (e.g. CFP related to $CO_2$ emissions). Using available and universal recognized data, it's possible to know a nation's world position according to the voice "$CO_2$ emissions per capita".

**CO2 Emission per capita:**

China - 3rd position
USA - 4th position
Italy - 10th position

In this case, computing the numerator (Wi) of the weighting factor formula is as follows:

$$\text{Wi (CFP)} = 1/3 + 1/4 + 1/10 = 0.68$$

This step is repeated for each EPI (for example purposes, only three EPI are considered in this case: CFP, NGC and EPC)

**Electric power consumption per capita:**

China - 7th position
USA - 2nd position
Italy - 5th position

$$\text{Wi (EPC)} = 1/7 + 1/2 + 1/5 = 0.84$$

**Natural gas consumption per capita:**

China - 11th position
USA - 6th position
Italy - 3rd position

$$\text{Wi (NGC)} = 1/11 + 1/6 + 1/3 = 0.59$$

Wk for these EPIs is then computed as follows:

$$Wk\ (CFP) = \ 0.68/(0.68+0.84+0.59) = 0.32$$

$$Wk\ (EPC) = 0.84/(0.68+0.84+0.59) = 0.40$$

$$Wk\ (NGC) = 0.59/(0.68+0.84+0.59) = 0.28$$

In the event that sufficient ranking data is not available for a particular EPI, then the average ranking of the other EPI data may be used.

The above calculated Wk values are then normalized (max Wk assumes unit value), to render the dynamic-sector GPI, as follows:

$$Wk\ (CFP) = \ 0.32/0.40 = 0.8$$

$$Wk\ (EPC) = 0.40/0.40 = 1$$

$$Wk\ (NGC) = 0.28/0.40 = 0.7$$

In this case, the GPI dynamic sector representing EPC is the largest, and the sector representing NGC is the smallest, and is rendered as 0.7 the size of the largest sector. The size of a dynamic sector is derived by multiplying the weighting factor by the area of an un-weighted (full-sized) sector. Note that while only 3 EPIs were computed in the above example, in most cases, the six aforementioned EPIs are used to assess the environmental efficiency.

Referring again to FIG. 3, assume that sector 302F represents EPC, and sector 302A represents WFP. From the GPI 300, it can be quickly inferred that EPC (electric power consumption) is of more significance than WFP (water footprint) for this particular example, because the sector 302A (representing WFP) is considerably smaller than the sector 302F (representing EPC).

The environmental efficiency of a particular instance of a process (e.g. a particular manufacturing plant), is referred to as the Local Eco-Efficiency (LEE). The LEE is computed by computing the percentage of clear areas (304A - 304F) within the total area of the sectors (302A - 302F). The shaded area is divided by the total area to obtain a fractional result. The fractional result is then subtracted from one, and then multiplied by 100 to compute the LEE. Mathematically, this is represented as follows:

$$LEE = \left(1 - \frac{A_{clear}}{A_{total}}\right) \times 100$$

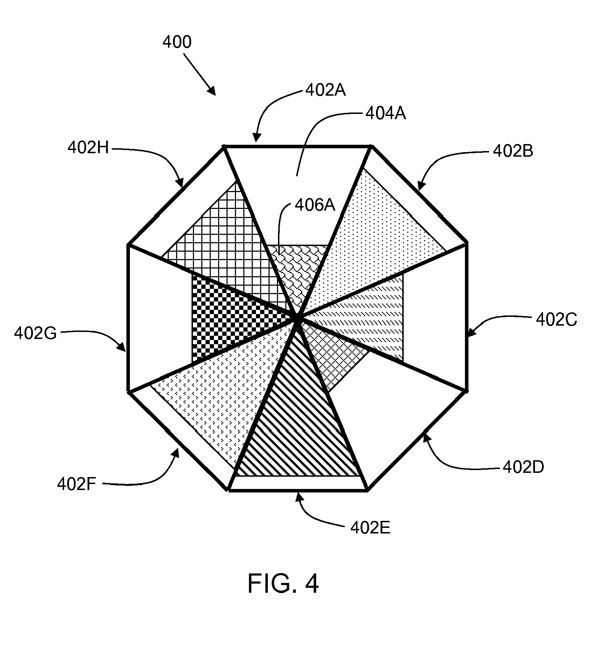

FIG. 4 shows another alternative embodiment of a graphical process indicator 400. This GPI is a fixed-sector 8-sided polygon (octagon). If two additional EPIs are used, a GPI such as that shown as 400 in FIG. 4 can be used to transform the EPI data into a graphical representation. This GPI has 8 sectors (402A - 402H). It is also contemplated to use a dynamic sector 8-sided polygon (not shown). Other EPIs may include, but are not limited to, such factors as land use, wastewater output, and solid waste output.

The aforementioned LEE quantifies the environmental efficiency (eco-efficiency) of a particular instance of a process, such as a particular plant for manufacturing tires, for example. Consider now the case of multiple geographically diverse plants that are producing the same product (in this case a tire). It is desirable to get a measure of how environmentally friendly the manufacture of this product is on a global level. A global eco-efficiency (GEE) value is computed which evaluates a comprehensive set of $X$ plants that produce the same product. The general formula for the GEE is as follows:

$$GEE_k = \frac{\sum_{i=1}^{X} N_{k,i} \times FPV_i}{\sum_{i=1}^{X} FPV_i}$$

$GEE_k$ represents the global eco-efficiency for $EPI_k$. $N_{k,i}$ is the normalized value for the given EPI at a given plant. $FPV_i$ is the finished product volume, or output from the process at plant $i$. In the example of tires, the FPV may be measured in output of tires, by number of tires, or weight of tire product, for example.

For example, it is desired to compute the GEE for CFP, for a product that is produced at three separate plants, then the formula is as follows:

$$GEE_{CFP} = \frac{\sum_{i=1}^{3} N_{CFP,i} \times FPV_i}{\sum_{i=1}^{3} FPV_i}$$

The GEE values for each EPI (e.g. CFP, WFP, NGC, EPC, BMR, and RPR) are then represented with a graphical process indicator, such that the GEE, which represents the global eco-efficiency of a product, can be quickly ascertained.

The GEE is used to compare multiple instances of producing the same product. However, it is sometimes desirable to compare the environmental impact of two different products (projects). The project eco-efficiency (PEE) is used to compare two different projects. Unlike the GEE and LEE, which describe environmental efficiency in absolute terms (depending on the selection of $R_k$ factors), the PEE allows comparison between two alternatives Q and R in relative terms. The shaded area for a given sector for a graphical process indicator representing a PEE calculation is computed as follows:

$$A_{shaded}^{Q,k} = A \times W_k - A\left(\frac{I^{k,Q}}{I^{k,R}}\right) \times W_k$$

$A_{shaded}^{Q,k}$ represents the shaded area of alternative Q for category k. A is the entire area of a full-sized sector.

$W_k$ is the weighting factor for category $k$ (e.g. EPC, WFP, etc...). $I^{k,Q}$ is the index of category k for alternative Q. $I^{k,R}$ is the index of category k for alternative R, and $I^{k,R} > I^{k,Q}$.

For a product that is produced at multiple production sites, it is possible to compute a LEE value for each production site, select one of the production sites as a reference site, and then compare the remaining production sites to the reference site by computing a difference between the reference LEE and the LEE of the particular production site. This LEE delta ($\Delta$LEE), which is the between the considered production site and the reference production site, provides a methodology for comparing multiple production facilities that are making the same product. For this type of analysis, it is possible to set each $R_k$ factor to 1, to avoid the step of selecting a particular $R_k$. With $R_k = 1$ for each LEE computation, the various production sites are able to be quickly and easily compared with each other.

For a project where only one EPI is of interest, it is possible to set $W_k$ of the EPI of interest equal to 1, and all

other $W_k$ equal to zero. For example, if it is only desired to investigate the impact of electric power consumption, then it is possible to set $W_{EPC}=1$ and other $W_k$ equal to zero. Two or more projects may be compared so long as the same $W_k$ factors are used for the examined categories.

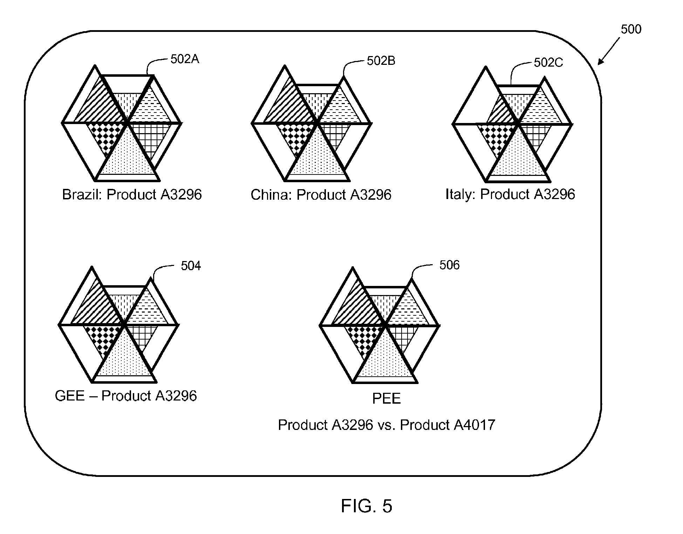

FIG. 5 shows a computer display 500 as part of a rendering system (108 of FIG. 1) that is displaying a plurality ofGPIs. GPIs 502A, 502B, and 502C show local eco-efficiency (LEE) for plants in three geographic locations that are making the same product. GPI 504 shows the global eco-efficiency (GEE) for that product. GPI 506 shows the PEE for two different products. In this way, stakeholders such as company officials and government agencies can quickly and easily assess the environmental impact of processes, such as manufacturing processes.

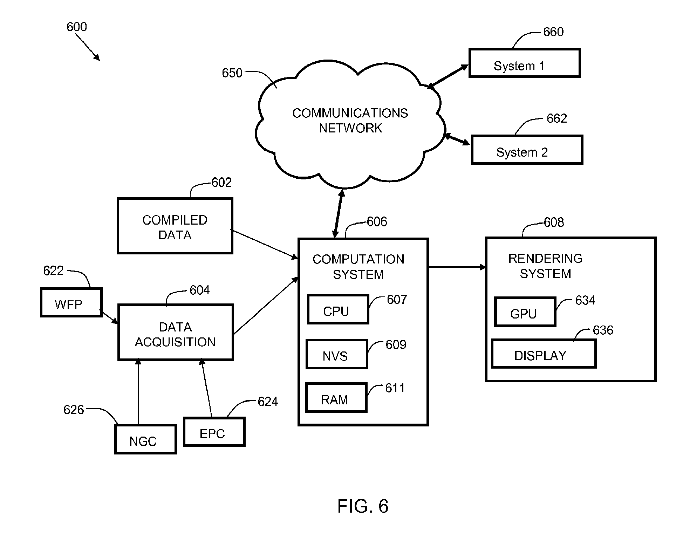

FIG. 6 shows a block diagram of a system 600 in accordance with an alternative embodiment of the present invention. In this embodiment, data acquisition system 604 receives data in real-time from water meter 622, electric meter 624, and natural gas meter 626. In this way, the graphical representation for those EPI can be updated in near real time. Other EPI data may be input to system 600 as part of the compiled data 602. This may include parameters such as BMR and CFP, for example. Computation system 606 preferably comprises at least one central processing unit (CPU) 607 and non-volatile storage 609, which may comprise read-only memory (ROM) and/or disk storage (not shown). The non-volatile storage 609 contains computer-readable instructions for computing display parameters (such as coordinates, colors, etc...) and conveying the data to the rendering system 608. Random access memory 611 may be used to store results of calculations resulting from execution of the computer-readable instructions. The rendering system 608 may comprise a graphics processing unit 634, and a display 636. The display 638 may be of any suitable technology, such as LCD, plasma, or a projector, for example.

Computation system 606 is connected to data communications network 650, which allows communications with other systems similar to system 600 at other sites, referenced as 660 and 662. In this way, geographically distributed sites can share the environmental data. For example, as shown in FIG. 5, data from Brazil, China, and Italy are displayed by the rendering system 608. In one embodiment, data communications network comprises the Internet. In another embodiment, a dedicated WAN is used as the communications network.

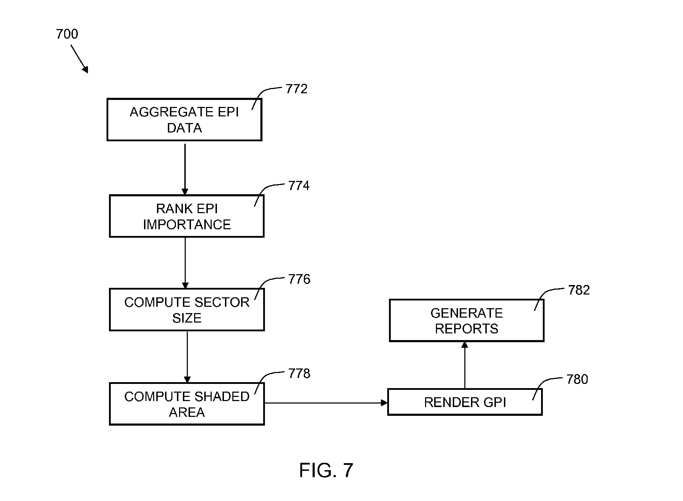

FIG. 7 is a flowchart 700 showing process steps to perform a method in accordance with an embodiment of the present invention. In process step 772, EPI data is aggregated, either via data acquisition subsystem (104 of FIG. 1) or via compiled data (102 of FIG. 1). In process step 774, the importance of each EPI is ranked. This step is used to determine the sector sizes when a dynamic-sector GPI is used. If a fixed-sector GPI is used, the process step 774 is optional. In process step 776, the sector size is computed, based on the ranking formulas disclosed previously in this disclosure. If a fixed-sector GPI is used, the process step 776 may be skipped. In process step 778, the shaded area of each sector is computed. In process step 780, the corresponding GPI is rendered. In process step 782, reports are generated. The reports may include, but are not limited to, GPI charts representing the LEE for a plurality of plants, a GEE for a one or more products, and a PEE for comparing two or more products or processes. In addition to the graphical format shown in FIG. 5, numeric data may also be presented in the report. The numeric data may include raw and/or normalized values for each EPI. Furthermore, the numeric value of each EPI over time may be presented in tabular form, or in a common data format such as CSV (comma separated value), such that it may be imported into a spreadsheet program and graphed.

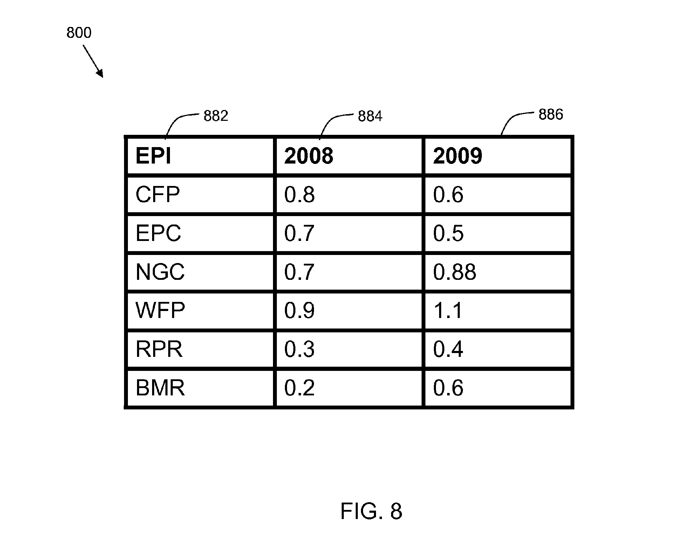

FIG. 8 shows an example of a numerical report 800 generated by an embodiment of the present invention. Report 800 is comprised of three columns. Column 882 shows the various EPIs (CFP, EPC, NGC, WFP, RPR, BMR). Column 884 shows the normalized value of each EPI as computed for a given year. Column 886 shows the normalized value of each EPI as computed for a different year. In this way, the trends of each individual EPI may be easily examined an analyzed.

Although the invention has been shown and described with respect to a certain preferred embodiment or embodiments, certain equivalent alterations and modifications will occur to others skilled in the art upon the reading and understanding of this specification and the annexed drawings. In particular regard to the various functions performed by the above described components (assemblies, devices, circuits, etc.) the terms (including a reference to a "means") used to describe such components are intended to correspond, unless otherwise indicated, to any component which performs the specified function of the described component (i.e., that is functionally equivalent), even though not structurally equivalent to the disclosed structure which performs the function in the herein illustrated exemplary embodiments of the invention. In addition, while a particular feature of the invention may have been disclosed with respect to only one of several embodiments, such feature may be combined with one or more features of the other embodiments as may be desired and advantageous for any given or particular application.

**Claims**

1. A system for determining the environmental impact of a process, comprising:

a) a computation system, the computation system comprising at least one central processing unit, non-volatile storage, and read-only memory;

b) a rendering system, the rendering system comprising a display;

c) the computation system further comprising means for receiving environmental performance data;

d) means for transforming the environmental performance data into a plurality of environmental performance indicator values; and

e) means for rendering a corresponding graphical process indicator on the rendering system;

f) wherein the graphical process indicator comprises an even-sided polygon; and

g) wherein the graphical process indicator is divided into a plurality of sectors, wherein each sector comprises a shaded component, the shaded component corresponding to value of one environmental performance indicator.

2. The system of claim 1, wherein the even-sided polygon is a hexagon.

3. The system of claim 1, wherein the even-sided polygon is an octagon or a superior polygon.

4. The system of claim 1, wherein the plurality of environmental performance indicator values comprises:

a) carbon footprint;

b) electric power consumption;

c) natural gas consumption;

d) water footprint;

e) renewable power ratio; and

f) biodegradable materials ratio.

5. The system of claim 1, wherein each sector of the plurality of sectors of the graphical process indicator is of equal size.

6. The system of claim 1, wherein each sector of the plurality of sectors is sized based on an importance ranking of an environmental performance indicator.

7. The system of claim 1, further comprising a data acquisition subsystem.

8. A method for determining the environmental impact of a process, comprising the steps of:

a) receiving environmental performance data;

b) transforming the environmental performance data into a plurality of environmental performance indicator values; and

c) rendering a corresponding graphical process indicator on a rendering system, wherein the graphical process indicator comprises an even-sided polygon, wherein the graphical process indicator is divided into a plurality of sectors, wherein each sector comprises a shaded component, the shaded component corresponding to value of one environmental performance indicator.

9. The method of claim 14, wherein the step of transforming the environmental performance data into a plurality of environmental performance indicator values comprises dividing a measured consumption rate by a maximum consumption rate, thereby computing a normalized environmental performance indicator.

10. The method of claim 14, wherein the step of rendering a corresponding graphical process indicator on a rendering system comprises:

a) computing, for each environmental performance indicator, a sum of the reciprocal of the ordinal rank of the environmental performance indicator from a plurality of jurisdictions;

b) dividing each sum by the total of all sums, thereby computing a weighting factor for each environmental performance indicator;

c) multiplying the weighting factor by the area of an un-weighted sector, thereby calculating the area of a dynamic sector; and

d) rendering the dynamic sector on the rendering system.

11. The method of claim 14, wherein the step of rendering a corresponding graphical process indicator on the rendering system comprises rendering a shaded area within the sector, wherein the shaded area corresponds to the value of the environmental performance indicator.

**12.** The method of claim 17, further comprising the steps of:

a) computing a total area of all sectors;
b) computing a total shaded area;
c) computing a ratio of total shaded area to total area;
d) subtracting the ratio from one to compute a fractional result; and
e) multiplying the fractional result by one hundred, thereby computing a local eco-efficiency value.

**13.** The method of claim 18, further comprising the steps of:

a) computing a plurality of local eco-efficiency values, wherein each local eco-efficiency value corresponds to a different production site, and wherein each production site produces the same categories of products;
b) selecting from the plurality of local eco-efficiency values, a local eco-efficiency value, and designating the selected local eco-efficiency value as a reference local eco-efficiency value; and
c) computing a local eco-efficiency delta for each production site by computing the difference between each of the plurality of local eco-efficiency values with the reference local eco-efficiency value.

**14.** A computer-readable medium having computer-executable instructions for performing a method comprising:

a) receiving environmental performance data;
b) dividing a measured consumption rate by a maximum consumption rate, thereby computing a plurality of raw environmental performance indicators;
c) computing a weighting factor for each raw environmental performance indicator; and
d) rendering a corresponding graphical process indicator on the rendering system, wherein the graphical process indicator comprises an even-sided polygon, wherein the graphical process indicator is divided into a plurality of sectors, wherein each sector comprises a shaded component, the shaded component corresponding to value of one environmental performance indicator.

**15.** The computer-readable medium of claim 19, wherein the computer-executable instructions for rendering a corresponding graphical process indicator on the rendering system comprise instructions for:

a) computing a dynamic sector area for each of a plurality of environmental performance indicators by multiplying an un-weighted sector area by a weighting factor corresponding to an environmental performance indicator; and
b) rendering a shaded area within the sector, wherein the shaded area corresponds to the value of the environmental performance indicator.

FIG. 1

200

202A

204A

206A

202F

204F

206F

202B

204B

206B

206E

206C

204E

202E

204C

206D

202C

204D

202D

FIG. 2

FIG. 3

FIG. 4

Brazil: Product A3296

China: Product A3296

Italy: Product A3296

GEE – Product A3296

PEE

Product A3296 vs. Product A4017

FIG. 5

FIG. 6

700

772
AGGREGATE EPI
DATA

774
RANK EPI
IMPORTANCE

776
COMPUTE SECTOR
SIZE

778
COMPUTE SHADED
AREA

782
GENERATE
REPORTS

780
RENDER GPI

FIG. 7

800

| EPI | 2008 | 2009 |
|-----|------|------|
| CFP | 0.8 | 0.6 |
| EPC | 0.7 | 0.5 |
| NGC | 0.7 | 0.88 |
| WFP | 0.9 | 1.1 |
| RPR | 0.3 | 0.4 |
| BMR | 0.2 | 0.6 |

882     884     886

FIG. 8

Europäisches
Patentamt

European
Patent Office

Office européen
des brevets

# EUROPEAN SEARCH REPORT

Application Number

EP 10 19 1921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The claims relate to subject-matter excluded from patentability pursuant to Article 52(2)(c) and (3) EPC and/or merely specify commonplace technical means relating to its technological implementation, the technical means being so conventional that they were widely available to everyone at the date of filing. No documentary evidence is considered required because of their notoriety; thus no document is cited in the search report. Furthermore, the search examiner could not establish a technical problem which might potentially have required an inventive step to solve.<br>----- | 1-15 | INV.<br>G06Q10/00 |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 17 March 2011 | Blackley, William |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)